# EUROPEAN PATENT APPLICATION

(11) **EP 4 756 986 A1**
(43) Date of publication of application: **10.06.2026**
(21) Application number: 24863203.6
(22) Date of filing: 05.09.2024
(51) Int. Cl.: H01M 10/48

(54) **BATTERY UNIT**

(30) Priority: 07.09.2023 KR 20230119111
(71) Applicant: LG Energy Solution, Ltd., Seoul 07335 (KR)
(72) Inventor: PARK, Jin Soo, Daejeon 34122 (KR); CHA, Hun, Daejeon 34122 (KR); NA, Jong Seung, Daejeon 34122 (KR); KIM, Sang Woo, Daejeon 34122 (KR); LEE, So Jeong, Daejeon 34122 (KR)
(74) Representative: Hoffmann Eitle
(86) International application number: PCT/KR2024/013374
(87) International publication number: WO 2025/053624

(57) **Abstract**

The present disclosure relates to a battery unit, and more specifically, to a battery unit capable of measuring the temperature for each of a plurality of areas on the surface of a battery cell. A battery unit according to an embodiment of the present disclosure includes a battery cell; n (n is a natural number of 2 or more) wires installed on the surface of the battery cell and having an insulation coating formed between one end and the other end; a fixing member that attaches and fixes the one end of each of the n wires to the surface of the battery cell; and n temperature measuring elements that are respectively connected to the other ends of the n wires and measure the temperature of the other ends of the n wires, respectively.

## Description

### TECHNICAL FIELD

### CROSS-REFERENCE TO RELATED APPLICATIONS

The present application claims priority to Korean Patent Application No. 10-2023-0119111 filed on September 7, 2023 in the Republic of Korea, the disclosures of which are incorporated herein by reference.

### TECHNICAL FIELD

The present disclosure relates to a battery unit, and more specifically, to a battery unit capable of measuring the temperature for each of a plurality of areas on the surface of a battery cell.

### BACKGROUND ART

A secondary battery (rechargeable battery) is a battery that can be charged and discharged, unlike a primary battery that cannot be recharged. A low-capacity secondary battery is used in small portable electronic devices such as mobile phones, laptop computers and camcorders, while a high-capacity battery is widely used as a power source for driving motors in hybrid vehicles or the like.

The secondary battery may be used in the form of a battery cell, and the battery cell may have a form in which a positive electrode, a separator and a negative electrode are sequentially stacked within an exterior material, and the inner space of the exterior material is filled with an electrolyte solution. A plurality of battery cells may be electrically connected to form a battery module or a battery pack.

In order to safely use a battery module or a battery pack, it is necessary to accurately detect the temperature of the battery cells. To this end, the battery module or the battery pack may include a temperature detection device for detecting the temperature of the battery cells inside.

This temperature detection device may be installed inside the housing of the battery module or the battery pack. In the prior art, a resistor is connected to a battery management system (BMS) circuit monitoring the temperature and voltage status of the battery cells inside the battery module or the battery pack, and the temperature of the battery cells is measured through the amount of change in the internal resistance of the resistor.

However, the temperature measured by this resistor is the temperature of the BMS circuit, which is different from the actual temperature of the battery cell, and thus there was a problem of being unable to precisely measure the temperature of the battery cell in the past. In particular, there was a problem of being unable to measure the temperature of the battery cell for each area with the resistor connected to the BMS circuit.

### SUMMARY

### TECHNICAL PROBLEM

The present disclosure is designed to solve the problems of the related art, and therefore the present disclosure is directed to providing a battery unit capable of precisely measuring the temperature for each of various areas of a battery cell.

### TECHNICAL SOLUTION

A battery unit according to an embodiment of the present disclosure includes a battery cell; n (n is a natural number of 2 or more) wires installed on the surface of the battery cell and having an insulation coating formed between one end and the other end; a fixing member that attaches and fixes one end of each of the n wires to the surface of the battery cell; and n temperature measuring elements that are respectively connected to the other ends of the n wires and measure the temperature of the other ends of the n wires, respectively.

The fixing member may be an adhesive pad that presses one end of each of the n wires toward the surface of the battery cell to attach and fix the one end of each of the n wires to the surface of the battery cell.

One end of each of the n wires may be attached and fixed to n different areas on the surface of the battery cell.

A battery unit according to another embodiment of the present disclosure may further include a calculation unit that calculates the temperature of each of the n different areas on the surface of the battery cell by correcting the n temperature values measured by the n temperature measuring elements.

The calculation unit may calculate the temperature values of the n different areas by respectively adding preset correction values through n experiments to each of the temperature values measured by the n temperature measuring elements.

The experiment may be an experiment in which each of the n temperature differences between the n different areas and the n temperature measuring elements is set to the n correction values.

The calculation unit may replace the temperature values measured by some failed temperature measuring elements with the arithmetic mean of the temperature values measured by the remaining temperature measuring elements.

The calculation unit may calculate the average temperature value of the battery cell through the average of the temperature values measured by the n temperature measuring elements.

Each of the n wires may have a different length.

The size of each of the n correction values may increase in proportion to the length of each of the n wires connected to the n temperature measuring elements.

The temperature measuring element may be a thermistor that measures temperature through a changing magnitude of internal resistance.

### ADVANTAGEOUS EFFECTS

A battery unit according to an embodiment of the present disclosure includes a battery cell, n (n is a natural number of 2 or more) wires installed on the surface of the battery cell and having an insulation coating formed between one end and the other end, a fixing member that attaches and fixes one end of each of the n wires to the surface of the battery cell, and n temperature measuring elements that are respectively connected to the other ends of the n wires and measure the temperature of the other ends of the n wires, respectively, thereby having an advantageous effect of being able to precisely measure the temperature of each of n areas of the battery cell.

### BRIEF DESCRIPTION OF THE DRAWINGS

FIG. 1 is a perspective view showing a battery unit according to Embodiment 1 of the present disclosure.
FIG. 2 is a right side view of a battery unit according to Embodiment 1 of the present disclosure.
FIG. 3 is an enlarged view of part A of FIG. 2.
FIG. 4 is a perspective view showing a battery unit according to Embodiment 2 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a battery unit according to the present disclosure will be described with reference to the drawings.

### Embodiment 1

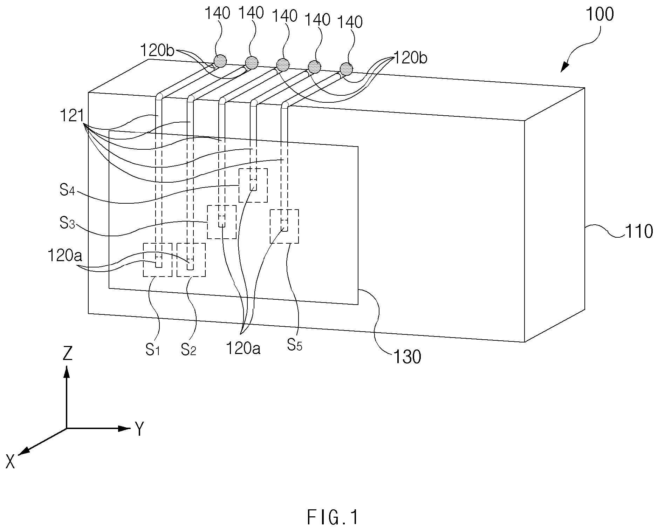

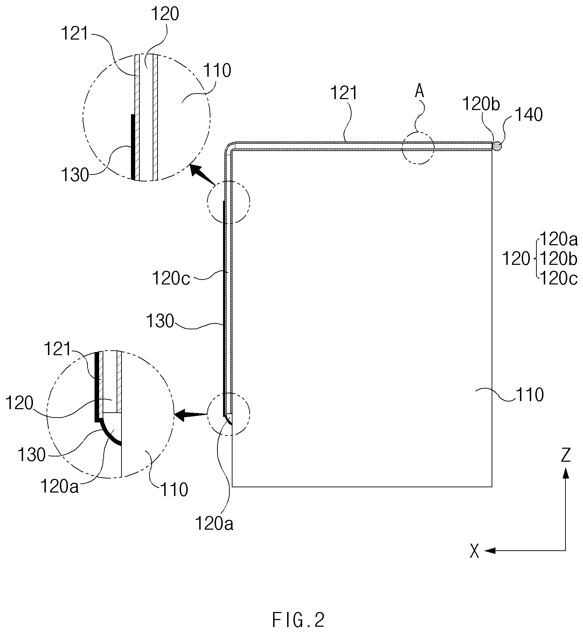

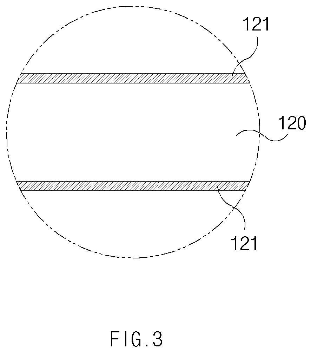

FIG. 1 is a perspective view showing a battery unit according to Embodiment 1 of the present disclosure. FIG. 2 is a right side view of a battery unit according to Embodiment 1 of the present disclosure, and FIG. 3 is an enlarged view of part A of FIG. 2.

Referring to FIGS. 1 to 3, a battery unit 100 according to Embodiment 1 of the present disclosure includes a battery cell 110, n (n is a natural number of 2 or more) wires 120 installed on the surface of the battery cell 110 and having an insulation coating 121 formed between one end 120a and the other end 120b of the n wires 120, a fixing member 130 that attaches and fixes one end 120a of each of the n wires 120 to the surface of the battery cell 110, and n temperature measuring elements 140 that are respectively connected to the other ends 120b of the n wires 120 and measure the temperature of the other ends 120a of the n wires 120, respectively.

In this case, one end 120a of the n wires 120 is attached to the surface of the battery cell 110, and an insulation coating 121 is formed between one end 120a and the other end 120b of each of the n wires 120, so that the temperature of the other end 120b of each of the n wires 120 may have a similar value to the temperature of the surface of the battery cell 110 to which one end 120a of each of the n wires 120 is attached. Therefore, in this case, there is an advantageous effect of being able to precisely measure the temperature of various areas on the surface of the battery cell 110 through the temperature values measured by each of the n temperature measuring elements 140.

The battery cell 110 is a secondary battery that can be charged and discharged, and may have various structures. For example, the battery cell 110 may have a stack-cell structure in which an exterior material surrounds a stack where a plurality of separators and electrodes are alternately stacked. The electrode may be a positive electrode plate or a negative electrode plate in the shape of a triangular plate.

The positive electrode plate is a lithium source where lithium (Li) is stored, and may have a structure in which a positive electrode active material or the like is applied to a metal substrate such as thin aluminum. The negative electrode plate stores and releases lithium ions from the positive electrode and allows a current to flow to a connected external circuit, and may have a structure in which a negative electrode active material or the like is applied to a metal substrate such as thin copper.

The separator is a thin plate interposed between the positive electrode plate and the negative electrode plate to physically block the positive electrode plate and the negative electrode plate, and may be made of various materials. For example, the separator may be made of an insulator such as polyethylene (PE), polypropylene (PP), or the like.

Electrode tabs may be coupled to the electrodes included in the battery cell 110, respectively. The electrode tab transmits the electrical signal of the electrode to the outside, and the electrode tab may be a positive electrode tab coupled to the positive electrode or a negative electrode tab coupled to the negative electrode. The electrode tab may have various materials and shapes with the electrode. For example, the electrode tab may be made of a metal such as aluminum or copper, and may have a thin triangular terminal shape.

The wire 120 is a thin metal wire installed on the surface of the battery cell 110, and n different wires 120 may be installed on the surface of the battery cell 110. Additionally, various materials may be used for the wire 120. For example, a material with high thermal conductivity, such as copper, aluminum, a copper alloy, an aluminum alloy, or the like may be used for the wire 120.

Additionally, the wire 120 may be composed of one end 120a, the other end 120b, and a body 120c. Additionally, an insulation coating 121 that surrounds only the body 120c except for the one end 120a and the other end 120b may be formed on the wire 120, and thus the body 120c may transfer heat from the one end 120a to the other end 120b, or heat from the other end 120b to the one end 120a without heat loss to the outside.

The fixing member 130 attaches and fixes one end 120a of each of the n wires 120 to the surface of the battery cell 110, thereby maintaining a state in which one end 120a of each of the n wires 120 contacts each surface of the battery cell 110. That is, the one end 120a of each wire 120 contacts the surface of the battery cell 110, and thus the temperature of the one end 120a may have a similar value to the temperature of a portion of the surface of the battery cell 110 that the one end 120a contacts.

Additionally, an insulation coating 121 is formed between the one end 120a and the other end 120b, and thus the temperature of the other end 120b may have a similar value to the temperature of the one end 120a. Therefore, the temperature of the other end 120b may have a similar value to the temperature of a portion of the surface of the battery cell 110 that the one end 120a contacts.

The battery unit 100 may include n temperature measuring elements 140 respectively connected to the other ends 120b of n different wires 120. In this case, the temperature measuring element 140 may measure the temperature of the other end 120b of the connected wire 120. As described above, the temperature of the other end 120b of the wire 120 may have a similar value to the temperature of a portion of the surface of the battery cell 110 that the one end 120a contacts, and thus the user may precisely measure the temperature of various areas of the battery cell 110 through the temperature values measured by the temperature measuring elements 140.

Meanwhile, the fixing member 130 may be an adhesive pad that presses one end 120a of each of the n wires 120 toward the surface of the battery cell 110 to attach and fix the one end 120a of each of the n wires 120 to the surface of the battery cell 110. In this case, each one end 120a of the n wires 120 is attached to the surface of the battery cell 110 by an adhesive pad, and thus there is an advantageous effect of facilitating the attachment of the wires 120 to the surface of the battery cell 110.

Here, the adhesive pad is a pad having an adhesive surface formed on one surface, and the adhesive pad may be attached to the battery cell 110 so that the adhesive surface presses the n wires 120 and the surface of the battery cell 110. The adhesive pad may have various shapes and structures. For example, the adhesive pad may have a triangular pad shape that presses the surface of the battery cell 110 together with the one end 120a and a portion of the body 120c of the n wires 120, and the adhesive pad may have a structure in which an adhesive material is applied to one surface of a membrane substrate obtained by acetylating cellulose.

Meanwhile, one end 120a of each of the n wires 120 may be attached and fixed to n different areas S₁, S₂, ..., Sₙon the surface of the battery cell 110. In this case, there is an advantageous effect of being able to measure the temperature of various areas of the battery cell 110 as many as the number of installed temperature measuring elements 140.

Here, n different areas S₁, S₂, ..., Sₙ may be located in various areas on the surface of the battery cell 110. For example, the n different areas S₁, S₂, ..., Sₙ may all be located on one surface of the exterior material of the battery cell 110. Additionally, when the exterior material of the battery cell 110 is a polyhedron, the n different areas S₁, S₂, ..., Sₙ may be distributed and located on multiple surfaces.

### Embodiment 2

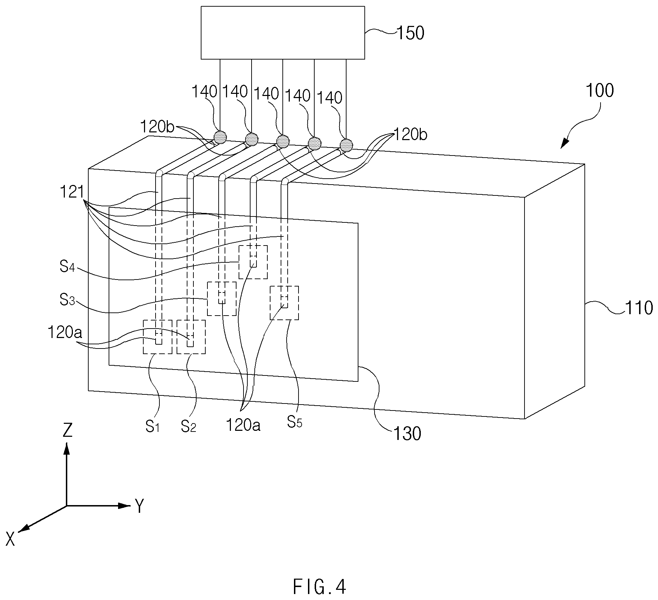

FIG. 4 is a perspective view showing a battery unit according to Embodiment 2 of the present disclosure.

The battery unit 100 according to Embodiment 2 of the present disclosure differs from Embodiment 1 in that it further includes a calculation unit 150 that calculates the temperature of n different areas S₁, S₂, ..., Sₙ on the surface of the battery cell 110 by correcting the n temperature values measured by n temperature measuring elements 140. The contents common to Embodiment 1 will be omitted as much as possible, and Embodiment 2 will be described focusing on the differences. That is, it is obvious that contents not described in Embodiment 2 may be regarded as contents of Embodiment 1 if necessary.

Referring to FIG. 4, a battery unit 100 according to Embodiment 2 of the present disclosure includes a battery cell 110, n (n is a natural number of 2 or more) wires 120 installed on the surface of the battery cell 110 and having an insulation coating 121 formed between one end 120a and the other end 120b, a fixing member 130 that attaches and fixes one end 120a of each of the n wires 120 to the surface of the battery cell 110, n temperature measuring elements 140 that are respectively connected to the other ends 120b of the n wires 120 and measure the temperature of the other ends 120a of the n wires 120, respectively, and a calculation unit 150 that calculates the temperature of n different areas S₁, S₂, ..., Sₙ on the surface of the battery cell 110 by correcting the n temperature values measured by n temperature measuring elements 140, respectively.

In this case, the temperature of the other end 120b of each of the n wires 120 measured by each of the n temperature measuring elements 140 is corrected by the calculation unit 150, and each of the n corrected temperature values is substantially the same as the temperature value of each of the n different areas S₁, S₂, ..., Sₙ on the surface of the battery cell 110 to which the one end 120a of each of the n wires 120 is attached, so that there is an advantageous effect of being able to measure the temperature of each of the n different areas S₁, S₂, ..., Sₙ on the surface of the battery cell 110 more precisely.

The calculation unit 150 is a device that corrects the n temperature values measured by each of the n temperature measuring elements 140, and may be electrically connected to each of the n temperature measuring elements 140. Each of the n temperature measuring elements 140 is connected to the other end 120b of each of the n wires 120, and thus the n temperature values measured by each of the n temperature measuring elements 140 may be the temperature values of the other end 120b of each of the n wires 120.

At this time, an insulation coating 121 is formed between the one end 120a and the other end 120b of each of the n wires 120, and thus the temperature of the other end 120b of each of the n wires 120 may have a similar value to the temperature of n different areas S₁, S₂, ..., Sₙ on the surface of the battery cell 110 to which the one end 120a of each of the n wires 120 is attached.

Moreover, the calculation unit 150 is connected to each of the n temperature measuring elements 140, and may correct the difference between the temperature values measured by the n temperature measuring elements 140 and the actual temperature values of n different areas S₁, S₂, ..., Sₙ on the surface of the battery cell 110. In this case, the n temperature values corrected by the calculation unit 150 are substantially the same as the actual temperature values of the n different areas S₁, S₂, ..., Sₙ on the surface of the battery cell 110, and thus the user may measure the temperature of each of the n different areas S₁, S₂, ..., Sₙ on the surface of the battery cell 110 more precisely.

Meanwhile, the calculation unit 150 may calculate the temperature of n different areas S₁, S₂, ..., Sₙ by respectively adding n preset correction values to each of the temperature values measured by the n temperature measuring elements 140. That is, the calculation unit 150 may calculate the temperature of n different areas S₁, S₂, ..., Sₙ on the surface of the battery cell 110 by respectively adding n preset correction values to each of the n temperature measuring elements 140.

In this case, the temperature of n different areas S₁, S₂, ..., Sₙ on the surface of the battery cell 110 is derived by a simple calculation of respectively adding the n preset correction values to each temperature value measured by the n temperature measuring elements 140, and thus there is an advantageous effect of being able to immediately derive the temperature of n different areas S₁, S₂, ..., Sₙ on the surface of the battery cell 110.

Meanwhile, n correction values may be preset through an experiment. The experiment may be an experiment in which each of the n temperature differences between the n different areas S₁, S₂, ..., Sₙ on the surface of the battery cell 110 and the n temperature measuring elements 140 is set to the n correction values.

In this experiment, the user may measure the temperature of the first area S₁, which is the first area among n different areas S₁, S₂, ..., Sₙ on the surface of the battery cell 110, and the temperature of the other end 120b of the wire 120 connected to the first area S₁, respectively, and then may calculate the difference value ΔT1 between them. Thereafter, the user may set the difference value ΔT1 as the first correction value. Using this method, the user may set the first correction value to the nth correction value for the n different areas S₁, S₂, ..., Sₙ on the surface of the battery cell 110, respectively.

The kth correction value derived here (k is a natural number of 1 or more and n or less) may be used to calculate the temperature of the kth area Sₖ, which is the kth area among n different areas S₁, S₂, ..., Sₙ on the surface of the battery cell 110. Specifically, the user may calculate the temperature of the kth area Sₖ by adding the kth correction value to the temperature value measured by the temperature measuring element 140 connected to the wire 120 attached to the kth area Sₖ.

Meanwhile, the user may calculate a plurality of times the temperature difference between the temperature of the first area S₁, which is the first area among the n different areas S₁, S₂, ..., Sₙ on the surface of the battery cell 110, and the temperature of the other end 120b of the wire 120 connected to the first area S₁, and then may set the average value of these as the first correction value. Using this method, the user may set the first correction value to the nth correction value for the n different areas S₁, S₂, ..., Sₙ on the surface of the battery cell 110, respectively.

Meanwhile, the calculation unit 150 may replace the temperature values measured by some failed temperature measuring elements 140 with the arithmetic mean of the temperature values measured by the remaining temperature measuring elements 140. Therefore, even if a failure occurs in some of the temperature measuring elements 140, there is an advantageous effect of being able to measure the temperature of each of n different areas S₁, S₂, ..., Sₙ on the surface of the battery cell 110.

Specifically, when the coupling between the temperature measuring element 140 and the other end 120b of the wire 120 is broken or when an external impact is applied to the temperature measuring element 140 to cause a crack, an abnormal temperature value may be detected in the temperature measuring element 140. In this case, the calculation unit 150 may replace the abnormal temperature value by calculating the arithmetic mean of the normal temperature values measured by the remaining temperature measuring elements 140 for some of the temperature measuring elements 140 in which the abnormal temperature value is detected.

Additionally, the calculation unit 150 may calculate the average temperature value of the battery cell 110 through the average of the temperature values measured by the n temperature measuring elements 140. In this case, as the number of temperature measuring elements 140 installed in the battery cell 110 increases, the difference between the calculated average temperature value of the battery cell 110 and the actual average temperature value of the battery cell 110 may decrease.

Meanwhile, each of the n wires 120 may have a different length. As shown in FIG. 4, the length of each of the n wires 120 may decrease from the left side surface to the right side surface of the battery cell 110, and all of the n wires 120 may have a straight structure.

At this time, the size of each of the n correction values may increase in proportion to the length of each of the n wires 120 connected to the n temperature measuring elements 140. In this case, the user may derive all of the n correction values through the correction values for any two areas among the n different areas S₁, S₂, ..., Sₙ on the surface of the battery cell 110, and thus there is an advantageous effect of facilitating correction of the difference between the temperature values of the n different areas S₁, S₂, ..., Sₙ on the surface of the battery cell 110 and the temperature values measured by the n temperature measuring elements 140.

Specifically, the user may derive the correction values for any two areas among the n different areas S₁, S₂, ..., Sₙ on the surface of the battery cell 110 by using the experimental method described above. Then, the user may derive n correction values proportional to the lengths of each of the n wires 120 by utilizing the length information of each of the n wires 120 attached to the surface of the battery cell 110 and the correction values for the two areas derived through the experiment.

Meanwhile, the temperature measuring element 140 may be a thermistor that measures temperature through a changing magnitude of internal resistance. The thermistor includes a resistor whose internal resistance changes in magnitude during heat transfer with the contact portion, and may be easily welded and coupled to the other end 120b of the wire 120 and the circuit portion of the calculation unit 150.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

| | | | |
|---|---|---|---|
| 100: | Battery unit | 110: | Battery cell |
| 120: | Wire | 120a: | One end |
| 120b: | The other end | 120c: | Body |
| 121: | Insulation coating | 130: | Fixing member |
| 140: | Temperature measuring element | 150: | Calculation unit |

## Claims

1. A battery unit comprising:
a battery cell;
n (n is a natural number of 2 or more) wires installed on the surface of the battery cell and having an insulation coating formed between one end and the other end;
a fixing member that attaches and fixes the one end of each of the n wires to the surface of the battery cell; and
n temperature measuring elements that are respectively connected to the other ends of the n wires and measure the temperature of the other ends of the n wires, respectively, and

2. The battery unit according to claim 1,
wherein the fixing member is an adhesive pad that presses the one end of each of the n wires toward the surface of the battery cell to attach and fix the one end of each of the n wires to the surface of the battery cell.

3. The battery unit according to claim 1,
wherein the one end of each of the n wires is attached and fixed to n different areas on the surface of the battery cell.

4. The battery unit according to claim 3, further comprising:
a calculation unit that calculates a temperature of each of the n different areas on the surface of the battery cell by correcting n temperature values measured by the n temperature measuring elements.

5. The battery unit according to claim 4,
wherein the calculation unit calculates the temperature values of the n different areas by respectively adding preset correction values through n experiments to each of the temperature values measured by the n temperature measuring elements.

6. The battery unit according to claim 5,
wherein an experiment is an experiment in which each of n temperature differences between the n different areas and the n temperature measuring elements are set to the n correction values.

7. The battery unit according to claim 5,
wherein the calculation unit replaces the temperature values measured by some failed temperature measuring elements with the arithmetic mean of the temperature values measured by remaining temperature measuring elements.

8. The battery unit according to claim 5,
wherein the calculation unit calculates an average temperature value of the battery cell through an average of the temperature values measured by the n temperature measuring elements.

9. The battery unit according to claim 5,
wherein each of the n wires has a different length.

10. The battery unit according to claim 9,
wherein size of each of the n correction values increases in proportion to the length of each of the n wires connected to the n temperature measuring elements.

11. The battery unit according to claim 1,
wherein the temperature measuring element is a thermistor that measures temperature through a changing magnitude of internal resistance.
